# FASCICULE DE BREVET EUROPEEN

(11) **EP 3 031 730 B1**
(45) Date de publication et mention de la délivrance du brevet: **04.09.2019**
(21) Numéro de dépôt: 14307018.3
(22) Date de dépôt: 12.12.2014
(51) Int. Cl.: F02B 65/00, F02B 61/06, B64D 37/02, B64D 27/02, B64D 41/00, B64D 27/24

(54) **Aéronef et procédé d'aménagement d'un tel aéronef**
Luftfahrzeug und Verfahren zur Ausstattung eines solchen Luftfahrzeugs
Aircraft and method for arranging such an aircraft

(43) Date de publication de la demande: 15.06.2016
(73) Titulaire: AIRBUS (SAS), 31700 Blagnac (FR)
(72) Inventeur: Joubert, Emmanuel, 92130 Issy les Moulineaux (FR); Ferran, Benoit, 75012 Paris (FR); Sanitas, Antonin, 83201 Sollies-Pont (FR); Morin, Germain, 94200 Ivry sur Seine (FR)
(74) Mandataire: Gicquel, Olivier Yves Gérard

(56) Documents cités:
- WO-A1-2010/123601
- WO-A2-01/76941
- WO-A2-2009/054937
- CA-A1- 2 391 252
- DE-U1-202007 006 976
- US-A1- 2013 227 950

## Description

### Domaine de l'invention

La présente invention vise un aéronef et un procédé d'aménagement d'un tel aéronef.

La présente invention s'applique au domaine de l'aéronautique.

Plus particulièrement, la présente invention s'applique au domaine des aéronefs comportant un système de propulsion électrique, hybride mixte, hybride série ou hybride parallèle.

### État de la technique

Actuellement, la réalisation de plusieurs types de mission est possible par certains aéronefs, comme les avions de chasse qui peuvent emporter des réservoirs supplémentaires amovibles sous les ailes. Cependant, les ailes de ces avions sont surdimensionnées, à la conception de l'avion, pour accepter les contraintes dues à des réservoirs supplémentaires et pour pouvoir accueillir ces réservoirs supplémentaires. Le surdimensionnement des ailes implique une augmentation en masse par rapport à un avion ne pouvant pas comporter de réservoirs supplémentaires ce qui impacte les performances de l'appareil. De plus, les réservoirs supplémentaires génèrent une trainée de forme importante à haute vitesse ce qui impacte négativement les performances de l'avion.

Les avions sont conditionnés par une masse maximale au décollage fixée, ce qui entraîne, pour pouvoir réaliser différents types de mission, un choix à effectuer en ce qui concerne la répartition de la masse entre la charge utile et la quantité de carburant embarquée.

Les avions à propulsion électrique existant actuellement sont des avions conçus initialement pour être des avions à propulsion thermique dont la structure a été modifiée pour intégrer des moyens de propulsion électrique. Cependant, les modifications de la structure sont conséquentes. Les modifications sont des renforcements locaux à l'emplacement des batteries, des modifications des mats moteurs pour recevoir les moteurs électriques, des modifications de l'interface homme-machine, par exemple.

Ces modifications demandent une grande quantité de travail pour retirer les composants des moyens de propulsion thermique, adapter la structure et intégrer les moyens de propulsion électriques et ne permettent pas d'obtenir un avion électrique optimisé. Un aéronef et un groupe de moyens de propulsion interchangeables selon le préambule de la revendication 1 est connu du document WO2010/123601 A1.

### Objet de l'invention

La présente invention vise à remédier à tout ou partie de ces inconvénients.

À cet effet, selon un premier aspect, la présente invention est définie par l'objet de la revendication 1.

L'avantage de ces modes de réalisation est concevoir un aéronef, au moins partiellement à propulsion électrique, optimisé en termes de centrage, de masse, d'aérodynamique globale, de coût d'aménagement, de maintenance et d'exploitation, de technologie mise en oeuvre.

De plus, l'aéronef est configuré pour recevoir des moyens de propulsion hybrides ou électriques bien que, habituellement, des choix effectués pour concevoir un aéronef à propulsion hybride soient défavorables pour un aéronef à propulsion électrique, et réciproquement.

L'aéronef objet de la présente invention comporte une structure optimisée pour intégrer des moyens de propulsion modulables, électriques ou hybrides. En effet, quels que soient les moyens de propulsion auxiliaires intégrés dans la structure, les qualités de vol, la structure, l'équilibrage de l'aéronef sont sensiblement identiques.

Aussi, le taux d'immobilisation d'un aéronef objet de la présente invention est diminué. Et, les opérations de maintenance et l'outillage de maintenance peuvent être standardisés. En outre, il est possible de changer de moyens de propulsion auxiliaires après fabrication de l'aéronef sans modifier la structure de l'aéronef.

Finalement, un aéronef objet de la présente invention permet une diminution du coût total d'aménagement, de trente pourcents pour un aéronef à propulsion électrique et de vingt pourcents pour un aéronef à propulsion hybride par rapport à un aéronef à propulsion thermique. Les émissions de dioxyde de carbone sont réduites ainsi que la pollution sonore, les phases de vol à basse altitude étant effectuées en propulsion électrique.

La masse de l'aéronef est sensiblement identique quels que soient les moyens de propulsion auxiliaires intégrés dans la structure.

Ces modes de réalisation présentent l'avantage d'avoir une même structure conçue et ne nécessitant pas de modifications quels que soient les moyens de propulsion auxiliaires intégrés dans la structure.

Dans des modes de réalisation, l'emplacement, dans la structure, des moyens de propulsion auxiliaires est sensiblement identique quels que soient les moyens de propulsion auxiliaires intégrés dans la structure.

Un emplacement sensiblement identique des moyens de propulsion auxiliaires présente l'avantage de ne pas modifier la structure de l'aéronef objet de la présente invention, et de conserver les qualités de vol de l'aéronef. De plus, un emplacement central permet de faciliter l'équilibrage de l'aéronef.

Dans des modes de réalisation, la structure comporte des interfaces mécaniques de fixation pour chaque moyen de propulsion auxiliaires du groupe.

L'avantage de ces modes de réalisation est de permettre la mise en place des moyens de propulsion auxiliaires du groupe dans la structure, sans modification de la structure quels que soient les moyens de propulsion auxiliaires choisi.

Dans des modes de réalisation, l'aéronef objet de la présente invention comporte des moyens de refroidissement de chaque source d'alimentation électrique autonome.

Ces modes de réalisation présentent l'avantage d'éviter une surchauffe de chaque source d'alimentation électrique autonome et donc d'augmenter la durée de vie de chaque source d'alimentation électrique autonome.

Dans des modes de réalisation, le moteur à combustion interne comporte un réservoir à carburant, un arbre mécanique et une boîte de transmission.

L'avantage de ces modes de réalisation est d'avoir les éléments du moteur à combustion interne intégrés dans un emplacement prédéfini de la structure. Ces modes de réalisation permettent d'avoir un aéronef à propulsion hybride parallèle.

Dans des modes de réalisation, la source d'alimentation transformant une énergie thermique en énergie électrique et alimentant le moteur électrique comporte un réservoir à carburant et des moyens de conversion de courant alternatif en courant continu.

L'avantage de ces modes de réalisation est d'avoir les éléments de la source d'alimentation transformant une énergie thermique en énergie électrique intégrés dans un emplacement de la structure. Ces modes de réalisation permettent d'avoir un aéronef à propulsion hybride série.

Selon un deuxième aspect, la présente invention vise un procédé selon la revendication 8.

Les avantages, buts et caractéristiques particuliers du procédé objet de la présente invention étant similaires à ceux de l'aéronef objet de la présente invention, ils ne sont pas rappelés ici.

Dans des modes de réalisation, le procédé objet de la présente invention comporte, en outre, une étape de fixation des moyens de propulsion auxiliaires a des interfaces mécaniques de fixation.

L'avantage de ces modes de réalisation est d'utiliser les interfaces mécaniques de fixation nécessaires à la mise en place des moyens de propulsion auxiliaires parmi les interfaces mécaniques de fixation que comporte la structure.

### Brève description des figures

D'autres avantages, buts et caractéristiques particuliers de l'invention ressortiront de la description non-limitative qui suit d'au moins un mode de réalisation particulier d'un aéronef et d'un procédé d'aménagement d'un tel aéronef, en regard des dessins annexés, dans lesquels :
- la figure 1 représente, schématiquement et en perspective, un premier mode de réalisation particulier d'un aéronef partie de l' objet de la présente invention,
- la figure 2 représente, schématiquement, un premier mode de réalisation particulier d'un aéronef partie de l' objet de la présente invention,
- la figure 3 représente, schématiquement et en perspective, un deuxième mode de réalisation particulier d'un partie de l' objet de la présente invention,
- la figure 4 représente, schématiquement, un deuxième mode de réalisation particulier d'un aéronef partie de l' objet de la présente invention,
- la figure 5 représente, schématiquement et en perspective, un troisième mode de réalisation particulier d'un aéronef partie de l' objet de la présente invention,
- la figure 6 représente, schématiquement, un troisième mode de réalisation particulier d'un aéronef partie de l' objet de la présente invention et
- la figure 7 représente, sous forme de logigramme, un premier mode de réalisation d'un procédé objet de la présente invention.

### Description d'exemples de réalisation de l'invention

On note dès à présent que les figures ne sont pas à l'échelle.

La présente description est donnée à titre non limitatif, chaque caractéristique d'un mode de réalisation pouvant être combinée à toute autre caractéristique de tout autre mode de réalisation de manière avantageuse.

On note que le terme « un » est utilisé au sens « au moins un ».

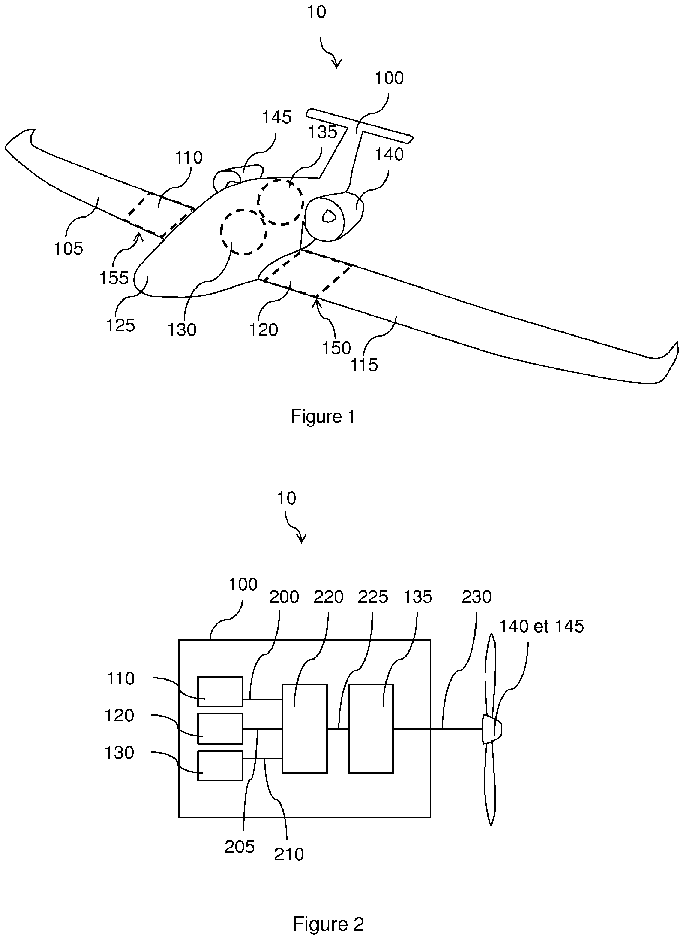

On observe sur la figure 1, un mode de réalisation particulier 10 d'un aéronef objet de la présente invention.

Le mode de réalisation 10 de l'aéronef objet de la présente invention comporte :
- au moins un moteur électrique 135,
- au moins une source, 110 ou 120, d'alimentation électrique autonome alimentant le moteur électrique 135,
- des moyens de propulsion 130 « dit moyens de propulsion auxiliaires » qui sont une source d'alimentation électrique autonome alimentant le moteur électrique 135,
- une structure 100 configurée pour intégrer le moteur électrique 135, chaque source d'alimentation électrique autonome, 110 et 120, et les moyens de propulsion auxiliaires 130, les paramètres de la structure 100 étant sensiblement identiques quels que soient les moyens de propulsion auxiliaires 130.

L'aéronef 10 est donc un aéronef à propulsion électrique.

La structure 100 comporte deux ailes, 105 et 115, ainsi qu'une partie centrale 125. La partie centrale 125 comporte deux moteurs, 140 et 145.

On définit un moteur, 140 ou 145, comme étant un moyen créant une force ou poussée qui résulte de l'accélération d'une masse d'air par une hélice. Le moteur, 140 ou 145, est un moteur à hélices ou un moteur à réaction ou tout autre moyen connu.

Dans des modes de réalisation, la partie centrale 125 comporte aux moins un moteur, 140 ou 145, tel un avion à monomoteur, par exemple. Dans des modes de réalisation, la partie centrale 125 ne comporte pas de moteur, 140 ou 145, et chaque aile, 105 et 115, comporte au moins un moteur, 140 ou 145. Dans des modes de réalisation, la partie centrale 125 et chaque aile, 105 et 115, comporte au moins un moteur, 140 ou 145.

Préférentiellement, la partie centrale 125 de la structure 100 comporte :
- un poste de pilotage,
- un contrôleur de moteur pour chaque moteur comporté par l'aéronef 10 et une commande de contrôleur de moteur,
- un superviseur aéronef commandant chaque contrôleur de moteur et
- une interface homme/machine.

Un contrôleur de moteur est un dispositif assurant la gestion de la puissance délivrée à un moteur électrique 135. Un contrôleur moteur gère la vitesse de rotation des hélices d'un moteur, 140 ou 145, et donc la vitesse de l'aéronef 10.

Un superviseur aéronef commande chaque contrôleur de moteur, effectue de la gestion intelligente de fonctions sensibles de l'aéronef 10 telles par exemple, la gestion de chaque source, 110, 120 et 130 d'alimentation électrique autonome, de chaque moteur, la mise en fonctionnement d'alarmes et la prédiction d'un besoin de maintenance.

L'interface homme/machine est une interface d'affichage de paramètres et d'informations dans le poste de pilotage et une interface de commande par l'utilisateur de l'aéronef 10.

Préférentiellement, l'aéronef 10 est un aéronef d'apprentissage au pilotage dans lequel la partie centrale peut comporter au moins deux passagers.

L'aile 105 comporte une source 110 d'alimentation électrique autonome. Préférentiellement, la source 110 d'alimentation électrique autonome comporte au moins une batterie au Lithium-ion polymère de deux cent cinquante volts. Dans des modes de réalisation, la source 110 d'alimentation électrique autonome comporte au moins une batterie Lithium-souffre. Dans des modes de réalisation, la source 110 d'alimentation électrique autonome comporte au moins une batterie Lithium-air.

La source 110 d'alimentation électrique autonome comporte un BMS (acronyme de « Battery Management System » en terminologie anglo-saxonne). Le BMS contrôle les paramètres de la source 110 d'alimentation électrique autonome. Les paramètres contrôlés sont, le courant, l'état de charge et la température de la source 110 d'alimentation électrique autonome, par exemple.

L'aile 105 comporte des moyens de refroidissement 155 de la source 110 d'alimentation électrique autonome. Préférentiellement, les moyens de refroidissement 155 sont situés sous l'aile 105.

L'aile 115 comporte une source 120 d'alimentation électrique autonome. Préférentiellement, la source 120 d'alimentation électrique autonome comporte au moins une batterie au Lithium-ion polymère de deux cent cinquante volts. Dans des modes de réalisation, la source 120 d'alimentation électrique autonome comporte au moins une batterie Lithium-souffre. Dans des modes de réalisation, la source 120 d'alimentation électrique autonome comporte au moins une batterie Lithium-air.

La source 120 d'alimentation électrique autonome comporte un BMS (acronyme de « Battery Management System » en terminologie anglo-saxonne). Le BMS contrôle les paramètres de la source 120 d'alimentation électrique autonome. Les paramètres contrôlés sont, le courant, l'état de charge et la température de la source 120 d'alimentation électrique autonome, par exemple.

L'aile 115 comporte des moyens de refroidissement 150 de la source 120 d'alimentation électrique autonome. Préférentiellement, les moyens de refroidissement 150 sont situés sous l'aile 115.

La partie centrale 125 de la structure 100 comporte les moyens de propulsion auxiliaires 130. Les moyens de propulsion auxiliaires 130 sont une source d'alimentation électrique autonome. Préférentiellement, la source 130 d'alimentation électrique autonome comporte au moins une batterie au Lithium-ion polymère de deux cent cinquante volts. Dans des modes de réalisation, la source 130 d'alimentation électrique autonome comporte au moins une batterie Lithium-souffre. Dans des modes de réalisation, la source 130 d'alimentation électrique autonome comporte au moins une batterie Lithium-air.

La source 130 d'alimentation électrique autonome comporte un BMS (acronyme de « Battery Management System » en terminologie anglo-saxonne). Le BMS contrôle les paramètres de la source 130 d'alimentation électrique autonome. Les paramètres contrôlés sont, le courant, l'état de charge et la température de la source 130 d'alimentation électrique autonome, par exemple.

Préférentiellement, la source 130 d'alimentation électrique autonome est située derrière les emplacements de sièges de l'aéronef 10.

La partie centrale 125 comporte des moyens de refroidissement de la source 130 d'alimentation électrique autonome. Préférentiellement, les moyens de refroidissement sont situés sous la partie centrale 125.

La partie centrale 125 comporte au moins un moteur électrique 135. Le moteur électrique 135 est alimenté par les sources d'alimentation électriques autonomes, 110, 120 et 130. Le moteur électrique 135 commande la vitesse de rotation des hélices des moteurs, 140 et 145.

Les sources d'alimentation électriques autonomes, 110, 120 et 130, alimentent en énergie électrique le contrôleur de moteur, le superviseur aéronef et l'interface homme/machine. Préférentiellement, le contrôleur de moteur et le superviseur aéronef sont des microprocesseurs comportant au moins un logiciel.

Préférentiellement, les informations de chaque BMS de chaque source d'alimentation électrique autonome, 110, 120 ou 130, sont transmises au superviseur aéronef.

La structure 100 comporte des interfaces mécaniques de fixation pour les moyens 130 de propulsion auxiliaires, une source d'alimentation transformant une énergie thermique en énergie électrique et alimentant le moteur électrique 135 et un moteur à combustion interne. Préférentiellement, les interfaces mécaniques de fixation sont des trous filetés.

Les moyens 130 de propulsion auxiliaires qui sont une source d'alimentation électrique autonome peuvent être échangés contre :
- une source d'alimentation transformant une énergie thermique en énergie électrique et alimentant le moteur électrique 135 ou
- un moteur à combustion interne.

Lors de l'échange, les logiciels du contrôleur de moteur et du superviseur aéronef sont mis à jour pour correspondre aux nouveaux moyens de propulsion auxiliaire.

En échangeant les moyens 130 de propulsion auxiliaires :
- la masse de l'aéronef 10 est sensiblement identique quels que soient les moyens 130 de propulsion auxiliaires intégrés dans la structure.et
- l'emplacement, dans la structure 100, des moyens 130 de propulsion auxiliaires est sensiblement identique quels que soient les moyens 130 de propulsion auxiliaires intégrés dans la structure.

On observe sur la figure 2, un premier mode de réalisation d'un aéronef 10 objet de la présente invention.

Le mode de réalisation 10 de l'aéronef objet de la présente invention comporte :
- au moins un moteur électrique 135,
- au moins une source, 110 et 120, d'alimentation électrique autonome alimentant le moteur électrique 135,
- des moyens de propulsion 130 « dit moyens de propulsion auxiliaires » qui sont une source d'alimentation électrique autonome alimentant le moteur électrique 135,
- une structure 100 configurée pour intégrer le moteur électrique 135, chaque source d'alimentation électrique autonome, 110 et 120, et les moyens de propulsion auxiliaires 130, les paramètres de la structure 100 étant sensiblement identiques quels que soient les moyens de propulsion auxiliaires 130.

Le courant continu 200 de la source d'alimentation électrique autonome 110, le courant continu 205 de la source d'alimentation électrique autonome 120, et le courant continu 210 de la source d'alimentation électrique autonome 130 sont transmis à un contrôleur de moteur 220. Le contrôleur de moteur 220 commande le courant électrique 225 à transmettre au moteur électrique 135.

Le courant 225 alimente le moteur électrique 135. Le moteur électrique 135 convertit l'énergie électrique en énergie mécanique et met en rotation l'arbre 230 à une vitesse définie par le superviseur aéronef et le contrôleur 220 de moteur. L'arbre 230 met en rotation les hélices des moteurs, 140 et 145, comportés par la structure 100 de l'aéronef 10.

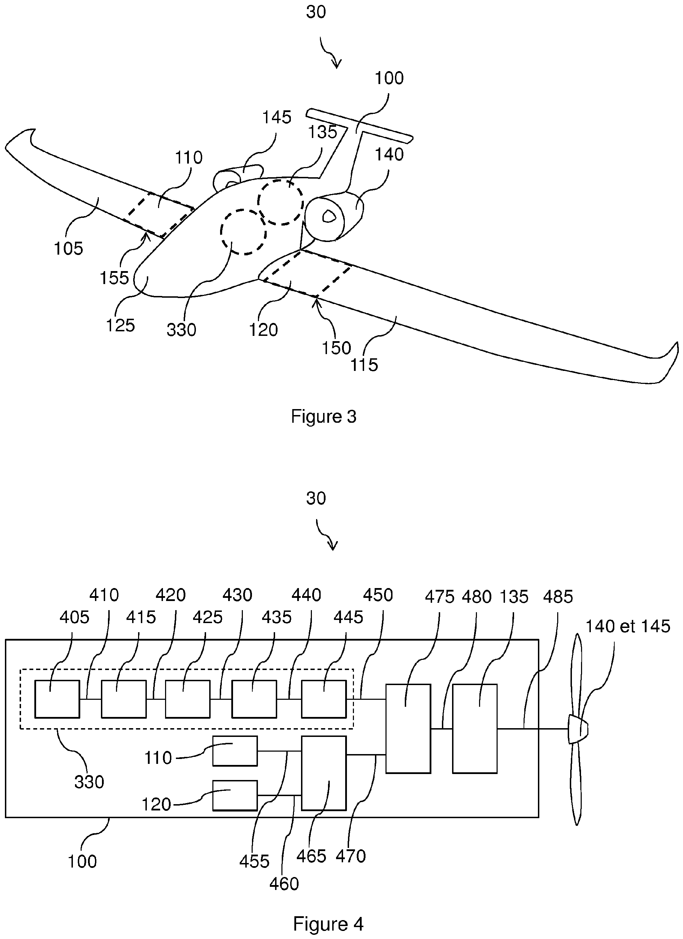

On observe sur la figure 3, un mode de réalisation particulier 30 d'un aéronef objet de la présente invention.

Le mode de réalisation 30 de l'aéronef objet de la présente invention comporte :
- au moins un moteur électrique 135,
- au moins une source, 110 et 120, d'alimentation électrique autonome alimentant le moteur électrique 135,
- des moyens de propulsion 330 « dit moyens de propulsion auxiliaires » qui sont une source d'alimentation transformant une énergie thermique en énergie électrique et alimentant le moteur électrique et
- une structure 100 configurée pour intégrer le moteur électrique 135, chaque source d'alimentation électrique autonome, 110 et 120, et les moyens de propulsion auxiliaires 330, les paramètres de la structure 100 étant sensiblement identiques quels que soient les moyens de propulsion auxiliaires 330.

L'aéronef 30 est donc un aéronef à propulsion hybride série.

La structure 100 comporte deux ailes, 105 et 115, ainsi qu'une partie centrale 125. La partie centrale 125 comporte deux moteurs, 140 et 145. Dans des modes de réalisation, la partie centrale 125 comporte aux moins un moteur, 140 ou 145. Dans des modes de réalisation, la partie centrale 125 ne comporte pas de moteur, 140 ou 145, et chaque aile, 105 et 115, comporte au moins un moteur, 140 ou 145. Dans des modes de réalisation, la partie centrale 125 et chaque aile, 105 et 115, comporte au moins un moteur, 140 ou 145.

Préférentiellement, la partie centrale 125 de la structure 100 comporte :
- un poste de pilotage,
- un contrôleur de moteur pour chaque moteur électrique 135 comporté par l'aéronef 30 et une commande de contrôleur de moteur,
- un superviseur aéronef 30 commandant chaque contrôleur de moteur et
- une interface homme/machine.

Un contrôleur de moteur est un dispositif assurant la gestion de la puissance délivrée à un moteur électrique 135. Un contrôleur moteur gère la vitesse de rotation des hélices d'un moteur, 140 ou 145, et donc la vitesse de l'aéronef 30.

Un superviseur aéronef, commande chaque contrôleur de moteur, effectue de la gestion intelligente de fonctions sensibles de l'aéronef 30 telles par exemple, la gestion de chaque source, 110 ou 120, d'alimentation électrique autonome, de chaque moteur, la mise en fonctionnement d'alarmes et la prédiction d'un besoin de maintenance.

L'interface homme/machine est une interface d'affichage de paramètres et d'informations dans le poste de pilotage et une interface de commande par l'utilisateur de l'aéronef 30.

Préférentiellement, l'aéronef 30 est un aéronef d'apprentissage au pilotage dans lequel la partie centrale 125 peut comporter au moins deux passagers.

L'aile 105 comporte une source 110 d'alimentation électrique autonome. Préférentiellement, la source 110 d'alimentation électrique autonome comporte au moins une batterie au Lithium-ion polymère de deux cent cinquante volts. Dans des modes de réalisation, la source 110 d'alimentation électrique autonome comporte au moins une batterie Lithium-souffre. Dans des modes de réalisation, la source 110 d'alimentation électrique autonome comporte au moins une batterie Lithium-air.

La source 110 d'alimentation électrique autonome comporte un BMS (acronyme de « Battery Management System » en terminologie anglo-saxonne). Le BMS contrôle les paramètres de la source 110 d'alimentation électrique autonome. Les paramètres contrôlés sont, le courant, l'état de charge et la température de la source 110 d'alimentation électrique autonome, par exemple.

L'aile 105 comporte des moyens de refroidissement 155 de la source 110 d'alimentation électrique autonome. Préférentiellement, les moyens de refroidissement 155 sont situés sous l'aile 105.

L'aile 115 comporte une source 120 d'alimentation électrique autonome. Préférentiellement, la source 120 d'alimentation électrique autonome comporte au moins une batterie au Lithium-ion polymère de deux cent cinquante volts. Dans des modes de réalisation, la source 120 d'alimentation électrique autonome comporte au moins une batterie Lithium-souffre. Dans des modes de réalisation, la source 120 d'alimentation électrique autonome comporte au moins une batterie Lithium-air.

La source 120 d'alimentation électrique autonome comporte un BMS (acronyme de « Battery Management System » en terminologie anglo-saxonne). Le BMS contrôle les paramètres de la source 120 d'alimentation électrique autonome. Les paramètres contrôlés sont, le courant, l'état de charge et la température de la source 120 d'alimentation électrique autonome, par exemple.

L'aile 115 comporte des moyens de refroidissement 150 de la source 120 d'alimentation électrique autonome. Préférentiellement, les moyens de refroidissement 150 sont situés sous l'aile 115.

La partie centrale 125 de la structure 100 comporte les moyens de propulsion auxiliaires 330. Les moyens de propulsion auxiliaires 330 sont une source d'alimentation transformant une énergie thermique en énergie électrique et alimentant le moteur électrique 135. Préférentiellement, les moyens de propulsion auxiliaires 330 comportent, un moteur à combustion interne, une génératrice, un réservoir à carburant et des moyens de conversion de courant alternatif en courant continu. Les moyens de conversion de courant alternatif en courant continu sont un redresseur, par exemple. L'énergie électrique produite par la génératrice à partir de la combustion du carburant comporté dans le réservoir à carburant par le moteur à combustion interne est redressée puis transmise au moteur électrique 135.

Préférentiellement, les moyens 330 de propulsion auxiliaires sont situés derrière les emplacements de sièges de l'aéronef.

La partie centrale 125 comporte des moyens de refroidissement des moyens 330 de propulsion auxiliaire. Préférentiellement, les moyens de refroidissement sont situés sous la partie centrale 125. Préférentiellement, les moyens de refroidissement comportent un liquide mis en circulation par une pompe et refroidi au moyen d'un échangeur mis en contact avec l'air ambiant.

La partie centrale comporte au moins un moteur électrique 135. Le moteur électrique 135 est alimenté par les sources d'alimentation électriques autonomes, 110 et 120, et par les moyens de propulsion auxiliaires 330. Le moteur électrique 135 commande la vitesse de rotation des hélices des moteurs, 140 et 145.

Les sources d'alimentations électriques autonomes, 110 et 120, et les moyens de propulsion auxiliaires 130 alimentent en énergie électrique le contrôleur de moteur, le superviseur aéronef et l'interface homme/machine. Préférentiellement, le contrôleur de moteur et le superviseur aéronef sont des microprocesseurs comportant au moins un logiciel.

Préférentiellement, les informations de chaque BMS de chaque source d'alimentation électrique autonome, 110 ou 120, sont transmises au superviseur aéronef.

La structure 100 comporte des interfaces mécaniques de fixation pour les moyens 330 de propulsion auxiliaires et une source d'alimentation électrique autonome alimentant le moteur électrique 135 et un moteur à combustion interne. Préférentiellement, les interfaces mécaniques de fixation sont des trous filetés. Préférentiellement, pour la fixation des moyens de propulsion auxiliaires 330, des berceaux de fixation sont mis en place dans les interfaces mécaniques de fixation.

Les moyens 330 de propulsion auxiliaires qui sont une source d'alimentation transformant une énergie thermique en énergie électrique et alimentant le moteur électrique peuvent être échangés contre :
- une source d'alimentation électrique autonome alimentant le moteur électrique 135,
- un moteur à combustion interne.

Lors de l'échange, les logiciels du contrôleur de moteur et du superviseur aéronef sont mis à jour pour correspondre aux nouveaux moyens 330 de propulsion auxiliaire.

En échangeant les moyens 330 de propulsion auxiliaires :
- la masse de l'aéronef 30 est sensiblement identique quels que soient les moyens 330 de propulsion auxiliaires intégrés dans la structure et
- l'emplacement, dans la structure 100, des moyens 330 de propulsion auxiliaires est sensiblement identique quels que soient les moyens 330 de propulsion auxiliaires intégrés dans la structure.

On observe sur la figure 4, un deuxième mode de réalisation d'un aéronef 30 objet de la présente invention.

Le mode de réalisation 30 de l'aéronef objet de la présente invention comporte :
- au moins un moteur électrique 135,
- au moins une source, 110 et 120, d'alimentation électrique autonome alimentant le moteur électrique 135,
- des moyens de propulsion 330 « dit moyens de propulsion auxiliaires » qui sont une source d'alimentation transformant une énergie thermique en énergie électrique et alimentant le moteur électrique et
- une structure 100 configurée pour intégrer le moteur électrique 135, chaque source d'alimentation électrique autonome, 110 et 120, et les moyens de propulsion auxiliaires 330, les paramètres de la structure 100 étant sensiblement identiques quels que soient les moyens de propulsion auxiliaires 330.

Les moyens 330 de propulsion auxiliaires comportent :
- un réservoir 405 à carburant comportant du carburant,
- un moteur à combustion interne 415,
- une génératrice 425,
- des moyens de conversion 435 de courant alternatif en courant continu et
- un hacheur 445.

Le carburant 410 provenant du réservoir 405 alimente le moteur à combustion interne 415. L'énergie mécanique 420 produite par le moteur à combustion interne 415 est transmise à une génératrice 425 qui transforme l'énergie mécanique 420 en énergie électrique 430. L'énergie électrique 430 issue de la génératrice est transmise à des moyens conversion 435 de courant alternatif 430 en courant continu 440. La tension du courant 440 est adapté au moyen d'un hacheur 445 en tension 450 compatible avec le contrôleur de moteur 475 et avec le moteur électrique 135. La tension 450 est fournie au contrôleur de moteur 475.

Le courant continu 455 de la source d'alimentation électrique autonome 110 et le courant continu 460 de la source d'alimentation électrique autonome 120, sont transmis à un convertisseur de courant 465. Le convertisseur de courant 465 associe les courant continus, 455 et 460, en courant 470. Le courant 470 alimente le contrôleur de moteur 475.

Le contrôleur de moteur 475 transmet au moteur électrique 135 un courant électrique 480 créé à partir du courant électrique 450 issu des moyens de propulsion alternatifs et du courant électrique 470 issu des sources d'alimentation électriques autonomes 110 et 120.

Le contrôleur de moteur 475 commande le courant électrique 480 à transmettre au moteur électrique 135. Le courant 480 alimente le moteur électrique 135. Le moteur électrique 135 converti l'énergie électrique en énergie mécanique et met en rotation l'arbre 485 à une vitesse définie par le superviseur aéronef et le contrôleur 475 de moteur. L'arbre 485 met en rotation les hélices des moteurs, 140 et 145, comportés par la structure 100 de l'aéronef 30.

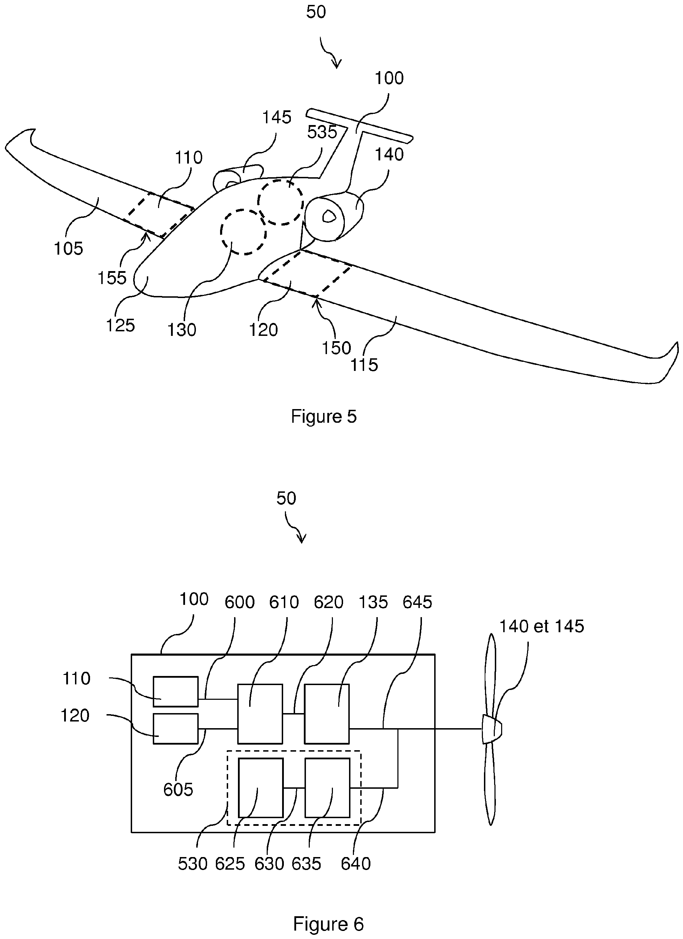

On observe sur la figure 5, un troisième mode de réalisation particulier 50 d'un aéronef objet de la présente invention.

Le mode de réalisation 50 de l'aéronef objet de la présente invention comporte :
- au moins un moteur électrique 135,
- au moins une source, 110 et 120, d'alimentation électrique autonome alimentant le moteur électrique 135,
- des moyens de propulsion 530 « dit moyens de propulsion auxiliaires » qui sont un moteur à combustion interne et
- une structure 100 configurée pour intégrer le moteur électrique 135, chaque source d'alimentation électrique autonome, 110 et 120, et les moyens de propulsion auxiliaires 530, les paramètres de la structure 100 étant sensiblement identiques quels que soient les moyens de propulsion auxiliaires 530.

L'aéronef 50 est donc un aéronef à propulsion hybride parallèle.

La structure 100 comporte deux ailes, 105 et 115, ainsi qu'une partie centrale 125. La partie centrale 125 comporte deux moteurs, 140 et 145. Dans des modes de réalisation, la partie centrale 125 comporte aux moins un moteur, 140 ou 145. Dans des modes de réalisation, la partie centrale 125 ne comporte pas de moteur, 140 ou 145, et chaque aile, 105 et 115, comporte au moins un moteur, 140 ou 145. Dans des modes de réalisation, la partie centrale 125 et chaque aile, 105 et 115, comporte au moins un moteur, 140 ou 145.

Préférentiellement, la partie centrale 125 de la structure 100 comporte :
- un poste de pilotage,
- un contrôleur de moteur pour chaque moteur comporté par l'aéronef 50 et une commande de contrôleur de moteur,
- un superviseur aéronef commandant chaque contrôleur de moteur et
- une interface homme/machine.

Un contrôleur de moteur est un dispositif assurant la gestion de la puissance délivrée à un moteur électrique 135. Un contrôleur moteur gère la vitesse de rotation des hélices d'un moteur, 140 ou 145, et donc la vitesse de l'aéronef 50.

Un superviseur aéronef, commande chaque contrôleur de moteur, effectue de la gestion intelligente de fonctions sensibles de l'aéronef 50 telles par exemple, la gestion de chaque source, 110 ou 120, d'alimentation électrique autonome, de chaque moteur, la mise en fonctionnement d'alarmes et la prédiction d'un besoin de maintenance.

L'interface homme/machine est une interface d'affichage de paramètres et d'informations dans le poste de pilotage et une interface de commande par l'utilisateur de l'aéronef 50.

Préférentiellement, l'aéronef 50 est un aéronef d'apprentissage au pilotage dans lequel la partie centrale 125 peut comporter au moins deux passagers.

L'aile 105 comporte une source 110 d'alimentation électrique autonome. Préférentiellement, la source 110 d'alimentation électrique autonome comporte au moins une batterie au Lithium-ion polymère de deux cent cinquante volts. Dans des modes de réalisation, la source 110 d'alimentation électrique autonome comporte au moins une batterie Lithium-souffre. Dans des modes de réalisation, la source 110 d'alimentation électrique autonome comporte au moins une batterie Lithium-air.

La source 110 d'alimentation électrique autonome comporte un BMS (acronyme de « Battery Management System » en terminologie anglo-saxonne). Le BMS contrôle les paramètres de la source 110 d'alimentation électrique autonome. Les paramètres contrôlés sont, le courant, l'état de charge et la température de la source 110 d'alimentation électrique autonome, par exemple.

L'aile 105 comporte des moyens de refroidissement 155 de la source 110 d'alimentation électrique autonome. Préférentiellement, les moyens de refroidissement 155 sont situés sous l'aile 105.

L'aile 115 comporte une source 120 d'alimentation électrique autonome. Préférentiellement, la source 120 d'alimentation électrique autonome comporte au moins une batterie au Lithium-ion polymère de deux cent cinquante volts. Dans des modes de réalisation, la source 120 d'alimentation électrique autonome comporte au moins une batterie Lithium-souffre. Dans des modes de réalisation, la source 120 d'alimentation électrique autonome comporte au moins une batterie Lithium-air.

La source 120 d'alimentation électrique autonome comporte un BMS (acronyme de « Battery Management System » en terminologie anglo-saxonne). Le BMS contrôle les paramètres de la source 120 d'alimentation électrique autonome. Les paramètres contrôlés sont, le courant, l'état de charge et la température de la source 120 d'alimentation électrique autonome, par exemple.

L'aile 115 comporte des moyens de refroidissement 150 de la source 120 d'alimentation électrique autonome. Préférentiellement, les moyens de refroidissement 150 sont situés sous l'aile 115.

La partie centrale 125 de la structure 100 comporte les moyens de propulsion auxiliaires 530. Les moyens de propulsion auxiliaires 530 sont un moteur à combustion interne mettant en rotation les moteurs, 140 et 145, parallèlement au moteur électrique 135. Préférentiellement, les moyens 530 de propulsion auxiliaires comportent, un réservoir à carburant, un arbre mécanique et une boîte de transmission. Le carburant est mis en combustion dans le moteur à combustion interne qui transmet un couple à l'arbre mécanique puis à la boîte de transmission. La boîte de transmission met en rotation des hélices des moteurs, 140 et 145.

Préférentiellement, les moyens 530 de propulsion auxiliaires sont situés derrière les emplacements de sièges de l'aéronef 50.

La partie centrale 125 comporte des moyens de refroidissement des moyens 530 de propulsion auxiliaire. Préférentiellement, les moyens de refroidissement sont situés sous la partie centrale 125. Préférentiellement, les moyens de refroidissement comportent un liquide mis en circulation par une pompe et refroidi au moyen d'un échangeur mis en contact avec l'air ambiant.

La partie centrale 125 comporte au moins un moteur électrique 135. Le moteur électrique 135 est alimenté par les sources d'alimentation électriques autonomes, 110 et 120. Le moteur électrique 135 commande la vitesse de rotation des hélices des moteurs, 140 et 145.

Les sources d'alimentations électriques autonomes, 110 et 120, alimentent en énergie électrique le contrôleur de moteur, le superviseur aéronef et l'interface homme/machine. Préférentiellement, le contrôleur de moteur et le superviseur aéronef sont des microprocesseurs comportant au moins un logiciel.

Préférentiellement, les informations de chaque BMS de chaque source d'alimentation électrique autonome, 110 ou 120, sont transmises au superviseur aéronef.

La structure 100 comporte des interfaces mécaniques de fixation pour les moyens 530 de propulsion auxiliaires et une source d'alimentation électrique autonome alimentant le moteur électrique 135 et une source d'alimentation convertissant une énergie mécanique en énergie électrique et alimentant le moteur électrique 135. Préférentiellement, les interfaces mécaniques de fixation sont des trous filetés. Préférentiellement, pour la fixation des moyens de propulsion auxiliaires 530, des berceaux de fixation sont mis en place dans les interfaces mécaniques de fixation.

Les moyens 530 de propulsion auxiliaires qui sont un moteur à combustion interne peuvent être échangés contre :
- une source d'alimentation électrique autonome alimentant le moteur électrique 135,
- une source d'alimentation convertissant une énergie mécanique en énergie électrique et alimentant le moteur électrique 135.

Lors de l'échange, les logiciels du contrôleur de moteur et du superviseur aéronef sont mis à jour pour correspondre aux nouveaux moyens de propulsion auxiliaire.

En échangeant les moyens 530 de propulsion auxiliaires :
- la masse de l'aéronef 50 est sensiblement identique quels que soient les moyens 530 de propulsion auxiliaires intégrés dans la structure et
- l'emplacement, dans la structure 100, des moyens 530 de propulsion auxiliaires est sensiblement identique quels que soient les moyens 530 de propulsion auxiliaires intégrés dans la structure.

On observe sur la figure 6, un troisième mode de réalisation d'un aéronef 50 objet de la présente invention.

Le mode de réalisation 50 de l'aéronef objet de la présente invention comporte :
- au moins un moteur électrique 135,
- au moins une source, 110 et 120, d'alimentation électrique autonome alimentant le moteur électrique 135,
- des moyens de propulsion 530 « dit moyens de propulsion auxiliaires » qui sont un moteur à combustion interne et
- une structure 100 configurée pour intégrer le moteur électrique 135, chaque source d'alimentation électrique autonome, 110 et 120, et les moyens de propulsion auxiliaires 530, les paramètres de la structure 100 étant sensiblement identiques quels que soient les moyens de propulsion auxiliaires 530.

Le courant continu 600 de la source d'alimentation électrique autonome 110 et le courant continu 600 de la source d'alimentation électrique autonome 120, sont transmis à un contrôleur de moteur 610. Le contrôleur de moteur 610 commande le courant électrique 620 à transmettre au moteur électrique 135. Le courant 620 alimente le moteur électrique 135.

Le moteur électrique 135 convertit l'énergie électrique en énergie mécanique et met en rotation l'arbre 645 a une vitesse définie par le superviseur aéronef et le contrôleur 610 de moteur. L'arbre 645 met en rotation les hélices des moteurs, 140 et 145, comportés par la structure 100 de l'aéronef 50.

Les moyens 530 de propulsion auxiliaires comportent un réservoir 625 à carburant 630, un arbre mécanique 640 et une boîte de transmission. Le carburant 625 est mis en combustion dans le moteur à combustion interne 635 qui transmet un couple à l'arbre mécanique 640 puis à la boîte de transmission. La boîte de transmission met en rotation des hélices des moteurs, 140 et 145, comportés par la structure 100 de l'aéronef 50.

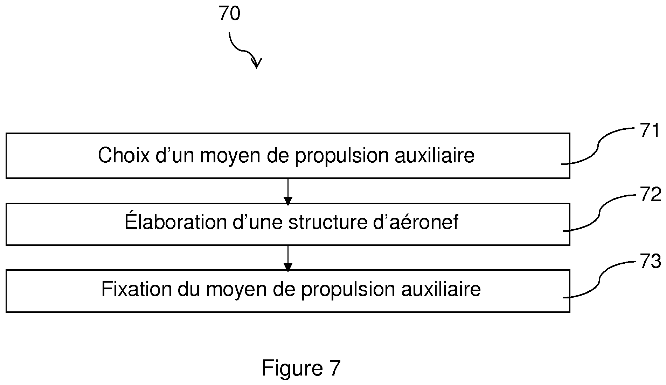

On observe sur la figure 7, un mode de réalisation d'un procédé d'aménagement d'un aéronef objet de la présente invention qui comporte les étapes suivantes :
- choix 71 par un utilisateur des moyens, 130, 330 ou 530, de propulsion auxiliaires dans un groupe comprenant :
   - une source d'alimentation électrique autonome 130 alimentant le moteur électrique,
   - une source d'alimentation 330 transformant une énergie thermique en énergie électrique et alimentant le moteur électrique et
   - un moteur à combustion interne 530 ;
- élaboration 72 d'une structure 100 configurée pour intégrer au moins un moteur électrique 135, au moins une source, 110 et 120, d'alimentation électrique autonome et les moyens, 130, 330 ou 530, de propulsion auxiliaires, les paramètres de la structure étant sensiblement identiques quels que soient les moyens, 130, 330 ou 530, de propulsion auxiliaires et
- fixation 73 des moyens, 130, 330 ou 530 de propulsion auxiliaires à des interfaces mécaniques de fixation.

Pendant l'étape de choix 71, un utilisateur définit les moyens de propulsion auxiliaires souhaités dans l'aéronef. Le choix 71 des moyens de propulsion auxiliaires définit si l'aéronef est un aéronef à propulsion électrique, hybride série ou hybride parallèle. Un aéronef 10 à propulsion électrique comporte en tant que moyens de propulsion auxiliaires une source 130 d'alimentation électrique autonome alimentant le moteur électrique 135. Un aéronef 30 à propulsion hybride série comporte en tant que moyens de propulsion auxiliaires une source d'alimentation 330 transformant une énergie thermique en énergie électrique et alimentant le moteur électrique 135. Un aéronef 50 à propulsion hybride série comporte en tant que moyens de propulsion auxiliaires un moteur à combustion interne 530.

Le choix des moyens de propulsion auxiliaires conduit à l'élaboration 72 d'une structure 100 configurée pour intégrer au moins un moteur électrique 135, au moins une source, 110 ou 120, d'alimentation électrique autonome et les moyens, 130, 330 ou 530, de propulsion auxiliaire, les paramètres de la structure 100 étant sensiblement identiques quels que soient les moyens de propulsion auxiliaires.

La masse de l'aéronef, 10, 30 ou 50, élaborée est sensiblement identique quels que soient les moyens, 130, 330 ou 530 de propulsion auxiliaires intégrés dans la structure 100. L'emplacement, dans la structure 100, des moyens, 130, 330 ou 530, de propulsion auxiliaires est sensiblement identique quels que soient les moyens de propulsion auxiliaires intégrés dans la structure 100. La structure comporte des interfaces mécaniques de fixation pour chaque moyen, 130, 330 et 530, de propulsion auxiliaires du groupe.

Une fois l'aéronef élaboré, les moyens de propulsion auxiliaires sont fixés à la structure par des interfaces mécaniques de fixation à l'étape de fixation 73.

Comme la structure 100 de l'aéronef, 10, 30 ou 50, est sensiblement la même quels que soient les moyens, 130, 330 ou 530, de propulsion auxiliaires choisis, les moyens, 130, 330 ou 530, de propulsions auxiliaires sont modulaires et peuvent être changés contre d'autres moyens, 130, 330 ou 530, de propulsion auxiliaires durant la durée de vie de l'aéronef 10, 30 ou 50. De plus, les interfaces de fixation mécaniques préexistent dans la structure 100 de l'aéronef quels que soient les moyens, 130, 330 ou 530, de propulsion auxiliaires choisis. Ainsi, la structure 100 est inchangée lors d'un changement des moyens, 130, 330 ou 530, de propulsion auxiliaires.

## Revendications

1. Aéronef (10, 30, 50) et groupe de moyens de propulsion; l'aéronef comportant :
- au moins un moteur électrique (135),
- au moins une première source (110, 120) d'alimentation électrique autonome alimentant le moteur électrique,
- un moyen (130, 330, 530) de propulsion «dit moyen de propulsion auxiliaire », compris dans ledit groupe de moyens de propulsion, ledit groupe de moyens de propulsion comprenant :
- une seconde source (130) d'alimentation électrique autonome alimentant le moteur électrique,
- une source (330) d'alimentation transformant une énergie thermique en énergie électrique et alimentant le moteur électrique et
- un moteur (530) à combustion interne ; l'aéronef comportant en outre
- une structure (100) configurée pour intégrer chaque moteur électrique, chaque source d'alimentation électrique autonome et un des moyens de propulsion auxiliaires, les paramètres de la structure étant sensiblement identiques quel que soit le moyen de propulsion auxiliaire et **caractérisé en ce que** la masse de l'aéronef est sensiblement identique quel que soit le moyen (130, 330, 530) de propulsion auxiliaire intégré dans la structure (100).

2. Aéronef (10, 30, 50) et groupe de moyens de propulsion selon la revendication 1, dans lequel l'emplacement, dans la structure (100), des moyens (130, 330, 530) de propulsion auxiliaires est sensiblement identique quel que soit le moyen de propulsion auxiliaire intégré dans la structure.

3. Aéronef (10, 30, 50) et groupe de moyens de propulsion selon l'une des revendications 1 à 2, dans lequel la structure (100) comporte des interfaces mécaniques de fixation pour le moyen (130, 330, 530) de propulsion auxiliaire.

4. Aéronef (10, 30, 50) et groupe de moyens de propulsion selon l'une des revendications 1 à 3, qui comporte des moyens de refroidissement de chaque source (110, 120, 130) d'alimentation électrique autonome.

5. Aéronef (50) et groupe de moyens de propulsion selon l'une des revendications 1 à 4, dans lequel le moteur (530) à combustion interne comporte un réservoir (625) à carburant (630), un arbre mécanique (640) et une boîte de transmission.

6. Aéronef (30) et groupe de moyens de propulsion selon l'une des revendications 1 à 5, dans lequel la source (330) d'alimentation transformant une énergie thermique en énergie électrique et alimentant le moteur électrique (135) comporte un réservoir (105) à carburant (410) et des moyens (435) de conversion de courant alternatif en courant continu.

7. Procédé (70) d'aménagement d'un aéronef (10, 30, 50) comportant au moins un moteur électrique (135), au moins une première source (110, 120) d'alimentation électrique autonome alimentant le moteur électrique, et un moyen de propulsion auxiliaire,
comportant les étapes suivantes :
- choix (71) par un utilisateur du moyen (130, 330, 530) de propulsion auxiliaire dans le groupe comprenant :
- une seconde source (130) d'alimentation électrique autonome alimentant le moteur électrique (135),
- une source (330) d'alimentation transformant une énergie thermique en énergie électrique et alimentant le moteur électrique et
- un moteur (530) à combustion interne ;
- élaboration (72) d'une structure (100) configurée pour intégrer ledit au moins un moteur électrique, ladite au moins une source d'alimentation électrique autonome et ledit moyen de propulsion auxiliaire, dans lequel les paramètres de la structure sont sensiblement identiques quel que soit le moyen de propulsion auxiliaire; **caractérisé en ce que** la masse de l'aéronef est sensiblement identique quel que soit le moyen (130, 330, 530) de propulsion auxiliaire intégré dans la structure (100).

8. Procédé (70) selon la revendication 7, qui comporte, en outre, une étape de fixation (73) du moyen (130, 330, 530) de propulsion auxiliaire à des interfaces mécaniques de fixation.

## Patentansprüche

1. Luftfahrzeug (10, 30, 50) und Gruppe von Antriebsmitteln; das Luftfahrzeug aufweisend:
- mindestens einen Elektromotor (135),
- mindestens eine erste unabhängige Stromversorgungsquelle (110, 120), die den Elektromotor versorgt,
- ein Antriebsmittel (130, 330, 530), das als "Nebenantriebsmittel" bezeichnet wird, das in der Gruppe von Antriebsmitteln enthalten ist, die Gruppe von Antriebsmitteln umfassend:
- eine zweite unabhängige Stromversorgungsquelle (130), die den Elektromotor versorgt,
- eine Stromquelle (330), die eine Wärmeenergie in elektrische Energie umwandelt und den Elektromotor versorgt, und
- einen Verbrennungsmotor (530);
das Luftfahrzeug ferner aufweisend
- eine Struktur (100), die dazu ausgebildet ist, jeden Elektromotor, jede unabhängige Stromversorgungsquelle und eins der Nebenantriebsmittel zu integrieren, wobei die Parameter der Struktur im Wesentlichen identisch sind, ganz gleich, welches das Nebenantriebsmittel ist, und **dadurch gekennzeichnet, dass** die Masse des Luftfahrzeugs im Wesentlichen identisch ist, ganz gleich, welches das Nebenantriebsmittel (130, 330, 530) ist, das in die Struktur (100) integriert ist.

2. Luftfahrzeug (10, 30, 50) und Gruppe von Antriebsmitteln nach Anspruch 1, wobei die Stelle der Nebenantriebsmittel (130, 330, 530) in der Struktur (100) im Wesentlichen identisch ist, ganz gleich, welches das Nebenantriebsmittel ist, das in die Struktur integriert ist.

3. Luftfahrzeug (10, 30, 50) und Gruppe von Antriebsmitteln nach einem der Ansprüche 1 bis 2, wobei die Struktur (100) mechanische Befestigungsschnittstellen für das Nebenantriebsmittel (130, 330, 530) aufweist.

4. Luftfahrzeug (10, 30, 50) und Gruppe von Antriebsmitteln nach einem der Ansprüche 1 bis 3, das Kühlmittel jeder unabhängigen Stromversorgungsquelle (110, 120, 130) aufweist.

5. Luftfahrzeug (50) und Gruppe von Antriebsmitteln nach einem der Ansprüche 1 bis 4, wobei der Verbrennungsmotor (530) einen Tank (625) für Treibstoff (630), eine mechanische Welle (640) und ein Getriebe aufweist.

6. Luftfahrzeug (30) und Gruppe von Antriebsmitteln nach einem der Ansprüche 1 bis 5, wobei die Stromquelle (330), die eine Wärmeenergie in elektrische Energie umwandelt und den Elektromotor (135) versorgt, einen Tank (105) für Treibstoff (410) und Mittel (435) zur Umwandlung von Wechselstrom in Gleichstrom aufweist.

7. Verfahren (70) zur Einrichtung eines Luftfahrzeugs (10, 30, 50), das mindestens einen Elektromotor (135), mindestens eine erste unabhängige Stromversorgungsquelle (110, 120), die den Elektromotor versorgt, und ein Nebenantriebsmittel aufweist, welches die folgenden Schritte aufweist:
- Auswählen (71), durch einen Benutzer, des Nebenantriebsmittels (130, 330, 530) aus der Gruppe, die Folgendes umfasst:
- eine zweite unabhängige Stromversorgungsquelle (130), die den Elektromotor (135) versorgt,
- eine Stromquelle (330), die eine Wärmeenergie in elektrische Energie umwandelt und den Elektromotor versorgt, und
- einen Verbrennungsmotor (530);
- Erstellen (72) einer Struktur (100), die dazu ausgebildet ist, den mindestens einen Elektromotor, die mindestens eine unabhängige Stromversorgungsquelle und das Nebenantriebsmittel zu integrieren, wobei die Parameter der Struktur im Wesentlichen identisch sind, ganz gleich, welches das Nebenantriebsmittel ist; **dadurch gekennzeichnet, dass** die Masse des Luftfahrzeugs im Wesentlichen identisch ist, ganz gleich, welches das Nebenantriebsmittel (130, 330, 530) ist, das in die Struktur (100) integriert ist.

8. Verfahren (70) nach Anspruch 7, das ferner einen Schritt des Befestigens (73) des Nebenantriebsmittels (130, 330, 530) an mechanischen Befestigungsschnittstellen aufweist.

## Claims

1. Aircraft (10, 30, 50) and group of propulsion means, the aircraft including:
- at least one electric motor (135),
- at least one first stand-alone electrical power supply (110, 120) supplying power to the electric motor,
- a propulsion means (130, 330, 530) referred to as "auxiliary propulsion means", included in said group of propulsion means, said groups of propulsion means comprising:
- a second stand-alone electrical power supply (130) supplying power to the electric motor,
- a power supply (330) converting thermal energy into electrical energy and supplying power to the electric motor, and
- an internal combustion engine (530);
the aircraft further comprising:
- a structure (100) configured to integrate each electric motor, each stand-alone electrical power supply and one of the auxiliary propulsion means, the parameters of the structure being substantially identical regardless of the auxiliary propulsion means and **characterized in that** the mass of the aircraft is substantially identical regardless of the auxiliary propulsion means (130, 330, 530) integrated into the structure (100).

2. Aircraft (10, 30, 50) and group of propulsion means according to Claim 1, wherein the location in the structure (100) of the auxiliary propulsion means (130, 330, 530) is substantially identical regardless of the auxiliary propulsion means integrated into the structure.

3. Aircraft (10, 30, 50) and group of propulsion means according to either one of Claims 1 and 2, wherein the structure (100) includes mechanical fixing interfaces for the auxiliary propulsion means (130, 330, 530).

4. Aircraft (10, 30, 50) and group of propulsion means according to any one of Claims 1 to 3, which includes cooling means for cooling each stand-alone electrical power supply (110, 120, 130).

5. Aircraft (50) and group of propulsion means according to any one of Claims 1 to 4, wherein the internal combustion engine (530) includes a tank (625) for fuel (630), a mechanical shaft (640) and a transmission box.

6. Aircraft (30) and group of propulsion means according to any one of Claims 1 to 5, wherein the power supply (330) converting thermal energy into electrical energy and supplying power to the electric motor (135) includes a tank (105) for fuel (410) and means (435) for converting alternating current into direct current.

7. Method (70) of fitting out an aircraft (10, 30, 50) including at least one electric motor (135), at least one first stand-alone electrical power supply (110, 120) supplying power to the electric motor, and an auxiliary propulsion means, including the following steps:
- choice (71) by a user of the auxiliary propulsion means (130, 330, 530) in the group comprising:
- a second stand-alone electrical power supply (130) supplying power to the electric motor (135),
- a power supply (330) converting thermal energy into electrical energy and supplying power to the electric motor, and
- an internal combustion engine (530);
- production (72) of a structure (100) configured to integrate said at least one electric motor, said at least one stand-alone electrical power supply and said auxiliary propulsion means, wherein the parameters of the structure are substantially identical regardless of the auxiliary propulsion means, **characterized in that** the mass of the aircraft is substantially identical regardless of the auxiliary propulsion means (130, 330, 530) integrated into the structure (100).

8. Method (70) according to Claim 7, further including a step (73) of fixing the auxiliary propulsion means (130, 330, 530) to mechanical fixing interfaces.
